# EUROPEAN PATENT APPLICATION

(11) **EP 4 773 205 A1**
(43) Date of publication of application: **08.07.2026**
(21) Application number: 23950247.9
(22) Date of filing: 31.08.2023
(51) Int. Cl.: H01M 4/131, H01M 10/0525

(54) **ELECTROCHEMICAL APPARATUS AND ELECTRONIC APPARATUS USING SAME**

(71) Applicant: Ningde Amperex Technology Limited, Ningde, Fujian 352100 (CN)
(72) Inventor: LIU, Mingju, Ningde, Fujian 352100 (CN)
(74) Representative: Dehns Germany Partnerschaft mbB
(86) International application number: PCT/CN2023/116336
(87) International publication number: WO 2025/043666

(57) **Abstract**

An electrochemical apparatus is provided, including a positive electrode, a negative electrode, and an electrolyte. The positive electrode includes a positive electrode current collector and a positive electrode active layer disposed on at least one surface of the positive electrode current collector. The positive electrode active layer includes a central region and an edge region surrounding an outer periphery of the central region, the edge region includes a first positive electrode active material, and the central region includes a second positive electrode active material. A solid-phase diffusion coefficient of the first positive electrode active material is 10⁻¹⁵ cm²/s to 10⁻⁵ cm²/s, and a ratio of the solid-phase diffusion coefficient of the first positive electrode active material to a solid-phase diffusion coefficient of the second positive electrode active material is 1:3 to 1:1.05. The above electrochemical apparatus is conducive to reducing a difference in kinetic performance between the central region and the edge region, thereby enhancing overall capacity utilization of the electrochemical apparatus and improving overall performance of the electrochemical apparatus. This application further provides an electronic apparatus using the electrochemical apparatus.

## Description

### TECHNICAL FIELD

This application relates to the field of electrochemical energy supply, in particular, to an electrochemical apparatus and an electronic apparatus using the same.

### BACKGROUND

Electrochemical apparatuses, especially lithium-ion batteries, possess advantages such as high energy density, high power, and long cycle life, and are widely used in the field of consumer electronics. As their application scope continues to expand, particularly in electric bicycles and electric vehicles, the performance requirements for electrochemical apparatuses are constantly increasing. Therefore, ensuring or improving the overall performance of electrochemical apparatuses is a current challenge.

### SUMMARY

In view of the above situation, it is necessary to provide an electrochemical apparatus in which overall performance is improved by reducing a difference in kinetic performance between a central region and an edge region of a positive electrode, and an electronic apparatus using the same.

A first aspect of this application provides an electrochemical apparatus, including a positive electrode, a negative electrode, and an electrolyte. The positive electrode includes a positive electrode current collector and a positive electrode active layer disposed on at least one surface of the positive electrode current collector. The positive electrode active layer includes a central region and an edge region surrounding an outer periphery of the central region, the edge region includes a first positive electrode active material, and the central region includes a second positive electrode active material. A solid-phase diffusion coefficient of the first positive electrode active material is 10⁻¹⁵ cm²/s to 10⁻⁵ cm²/s, and a ratio of the solid-phase diffusion coefficient of the first positive electrode active material to a solid-phase diffusion coefficient of the second positive electrode active material is 1:3 to 1:1.05.

In the electrochemical apparatus, an electric field strength in an edge region of each electrode plate is higher than an electric field strength in a central region. Due to the lack of differentiated design between an edge region and a central region of an electrode plate in the prior art, the edge region has a higher lithium deintercalation rate and a larger amount of deintercalated lithium, while the central region has a lower lithium deintercalation rate and a smaller amount of lithium deintercalated, resulting in reduced overall capacity utilization and poor overall kinetic performance of an electrochemical apparatus. In the electrochemical apparatus of this application, the differentiated design of the edge region and the central region of the positive electrode, in which the second positive electrode active material in the edge region has a lower solid-phase diffusion coefficient and the first positive electrode active material in the central region has a higher solid-phase diffusion coefficient, helping increase a solid-phase diffusion rate of lithium ions in the central region relative to the edge region, thereby improving the kinetic performance of the central region relative to the edge region. This is conducive to reducing the difference in kinetic performance between the central region and the edge region, narrows the difference in lithium deintercalation amounts between the edge region and the central region, and thus helping improve the overall capacity utilization of the electrochemical apparatus, improving the overall performance of the electrochemical apparatus. Additionally, the solid-phase diffusion rate of lithium ions in the first positive electrode active material within the above solid-phase diffusion coefficient range facilitates intercalation and deintercalation of lithium ions, contributing to improving the overall kinetic performance of the electrochemical apparatus. The specific ratio of solid-phase diffusion coefficients is also conducive to reducing the difference between the two regions while avoiding reverse differences, thereby improving the overall kinetic performance of the electrochemical apparatus.

Based on the first aspect, in some possible implementations, the ratio of the solid-phase diffusion coefficient of the first positive electrode active material to the solid-phase diffusion coefficient of the second positive electrode active material is 1:2.8 to 1:1.5, which is conducive to further reducing the difference between the two regions while avoiding reverse differences, thereby improving the overall kinetic performance of the electrochemical apparatus.

Based on the first aspect, in some possible implementations, a compacted density of the edge region is 2.0 g/cc to 4.35 g/cc, the compacted density of the edge region is greater than a compacted density of the central region, and a difference is 0.03 g/cc to 0.5 g/cc.

In the above possible implementations, the edge region is designed to have a higher compacted density and the central region is designed to have a lower compacted density. This is conducive to improving a liquid-phase diffusion capability of lithium ions in the central region relative to the edge region, thereby improving the kinetic performance of the central region relative to the edge region. This is conducive to reducing the difference in the kinetic performance between the central region and the edge region, thereby facilitating improved overall capacity utilization of the electrochemical apparatus and improving the overall performance of the electrochemical apparatus. Furthermore, the edge region with the compacted density within the above range and the central region with the compacted density within a specific difference range relative to the edge region facilitate enhanced overall volumetric energy density of the electrochemical apparatus, thereby facilitating the further improvement of the overall performance of the electrochemical apparatus.

Based on the first aspect, in some possible implementations, a ratio of a porosity of the edge region to a porosity of the central region is 1:2 to 1:1.1, and the porosity of the edge region is 10% to 45%.

In the above possible implementations, the central region is designed to have a higher porosity and the edge region is designed to have a lower porosity, to facilitate the improvement of the liquid-phase diffusion capability of lithium ions in the central region relative to the edge region, thereby improving the kinetic performance of the central region relative to the edge region. This is conducive to reducing the difference in kinetic performance between the central region and the edge region, thereby facilitating improved overall capacity utilization of the electrochemical apparatus and improving the overall performance of the electrochemical apparatus. An excessively high porosity of the edge region is not conducive to ensuring the volumetric energy density of the electrochemical apparatus, while an excessively low porosity of the edge region results in poor kinetic performance of the electrochemical apparatus, which is not conducive to ensuring the overall performance of the electrochemical apparatus. Additionally, an excessively low porosity ratio is not conducive to reducing the difference in the kinetic performance between the central region and the edge region, while an excessively high porosity ratio easily leads to a large difference between the central region and the edge region, potentially causing reverse differences, which is also not conducive to improving the overall performance of the electrochemical apparatus.

Based on the first aspect, in some possible implementations, a width of the edge region is 2 mm to 10 mm.

Based on the first aspect, in some possible implementations, the positive electrode active layer further includes a transition region. The transition region connects an inner periphery of the edge region and the outer periphery of the central region. A width of the transition region is 0.02 mm to 0.5 mm.

Based on the first aspect, in some possible implementations, a thickness of the central region is greater than a thickness of the edge region with a difference being less than 1 micron. The thickness of the edge region is 50 microns to 1000 microns.

In the above possible implementations, a thickness difference less than 1 micron between the central region and the edge region is conducive to improving flatness of the electrode assembly formed by the positive electrode and the negative electrode, thereby enhancing overall flatness of the electrochemical apparatus. Additionally, the above thickness range of the edge region and the difference range between the central region and the edge region help avoid the impact of flatness-related issues, such as purple spots or lithium precipitation, on the overall performance of the electrochemical apparatus.

Based on the first aspect, in some possible implementations, the thickness of the edge region is 100 microns to 500 microns.

Based on the first aspect, in some possible implementations, a ratio of a particle size Dᵥ50 of the first positive electrode active material to a particle size Dᵥ50 of the second positive electrode active material is 1.1:1 to 2:1, and the particle size Dᵥ50 of the first positive electrode active material is 1.0 micron to 25 microns.

In the above possible implementations, the edge region is designed to have the active material with a larger particle size and the central region is designed to have the active material with a smaller particle size, to reduce a solid-phase transport distance of lithium ions in the active material in the central region relative to the edge region, thereby improving the kinetic performance of the central region relative to the edge region. This is conducive to reducing the difference in the kinetic performance between the central region and the edge region, thereby facilitating improved overall capacity utilization of the electrochemical apparatus and improving the overall performance of the electrochemical apparatus. The first positive electrode active material within the above specific particle size range and the second positive electrode active material within the specific ratio range relative to the first positive electrode active material are conducive to achieving higher compacted density and higher kinetic performance of the electrode assembly, thereby improving the overall performance of the electrochemical apparatus.

Based on the first aspect, in some possible implementations, the edge region further includes a first binder. The central region further includes a second binder. A content of the second binder in the edge region is 0.4wt% to 4.0wt%. A ratio of a content of the second binder in the central region to a content of the first binder in the edge region is 1:1.02 to 1:2.

In the above possible implementations, the edge region is designed to have a higher binder content and the central region is designed to have a lower binder content, to reduce an interfacial transport resistance of lithium ions caused by the second binder in the central region relative to the first binder in the edge region, thereby improving the kinetic performance of the central region relative to the edge region. This is conducive to reducing the difference in the kinetic performance between the central region and the edge region, thereby facilitating improved overall capacity utilization of the electrochemical apparatus and improving the overall performance of the electrochemical apparatus. Furthermore, the second binder with the above content and the first binder with a specific content ratio range relative to the second binder are conducive to ensuring the bonding strength between the edge region and the central region and the positive electrode current collector, that is, the bonding strength between the positive electrode active layer and the positive electrode current collector, while also improving the kinetic performance of the entire positive electrode active layer. This contributes to structural stability of the positive electrode and improves the overall kinetic performance of the electrochemical apparatus, thereby facilitating the improvement of the overall performance of the electrochemical apparatus.

Based on the first aspect, in some possible implementations, the edge region further includes a first conductive agent. The central region further includes a second conductive agent. A content of the second conductive agent in the central region is 0.2wt% to 4.0wt%. A content of the second conductive agent in the central region is greater than a content of the first conductive agent in the edge region, with a difference being 0.1wt% to 2.0wt%.

In the above possible implementations, the edge region is designed to have a lower conductive agent content and the central region is designed to have a higher conductive agent content, to enhance an electron transport capability of the central region relative to the edge region, thereby improving the kinetic performance of the central region relative to the edge region. This is conducive to reducing the difference in kinetic performance between the edge region and the central region, thereby facilitating improved overall capacity utilization of the electrochemical apparatus and improving the overall performance of the electrochemical apparatus. The second conductive agent with the above specific content and the first conductive agent with a specific content difference range relative to the second conductive agent are conducive to ensuring the electron transport capability of the positive electrode and achieving higher kinetic performance by the positive electrode, thereby improving the overall performance of the electrochemical apparatus.

Based on the first aspect, in some possible implementations, under a 100% SOC condition, a lithium deintercalation amount of the first positive electrode active material in the edge region is greater than a lithium deintercalation amount of the second positive electrode active material in the central region, with a difference being 0.1% to 2%.

In the above possible implementations, the difference between the electrochemical reactions in the edge region and the central region is reduced, facilitating the improvement of the overall performance of the electrochemical apparatus.

A second aspect of this application provides an electronic apparatus, including a body and the electrochemical apparatus as described above, and the electrochemical apparatus is electrically connected to the body to supply power to the body. In the electronic apparatus of this application, the differentiated design of the edge region and the central region of the positive electrode, in which the positive electrode active material in the edge region has a lower solid-phase diffusion coefficient and the positive electrode active material in the central region has a higher solid-phase diffusion coefficient, increases a solid-phase diffusion rate of lithium ions in the central region relative to the edge region, thereby improving the kinetic performance of the central region relative to the edge region. This reduces the difference in kinetic performance between the central region and the edge region, narrows the difference in lithium deintercalation amounts between the edge region and the central region, and thus enhances the overall capacity utilization of the electrochemical apparatus, thereby improving the overall performance of the electrochemical apparatus. Consequently, power supply performance of the electronic apparatus is improved.

### BRIEF DESCRIPTION OF THE DRAWINGS

FIG. 1 is a schematic structural diagram of an electrochemical apparatus according to an embodiment of this application.
FIG. 2 is a schematic cross-sectional diagram of an electrochemical apparatus according to an embodiment of this application.
FIG. 3 is a schematic cross-sectional diagram of a positive electrode along a direction perpendicular to a thickness direction according to an embodiment of this application.
FIG. 4 is a schematic structural diagram of an electronic apparatus according to an embodiment of this application.

**Description of main component signs**

| | |
|---|---|
| Electrochemical apparatus | 100 |
| Positive electrode | 10 |
| Negative electrode | 30 |
| Separator | 50 |
| Thickness direction | X |
| Electrode assembly | A |
| Housing | 20 |
| Electrolyte | 60 |
| Positive electrode current collector | 11 |
| Positive electrode active layer | 13 |
| Central region | 131 |
| Edge region | 133 |
| Transition region | 135 |
| Negative electrode current collector | 31 |
| Negative electrode active layer | 33 |
| Electronic apparatus | 200 |
| Body | 201 |

The following specific embodiments will further illustrate this application in conjunction with the above drawings.

### DETAILED DESCRIPTION

The following describes some embodiments of this application through specific examples, and those skilled in the art can easily understand other advantages and effects of this application from the content disclosed in this specification. Although the description of this application is introduced with reference to the embodiments, this does not mean that the features of this application are limited to these embodiments. On the contrary, the purpose of introducing the application with reference to the embodiments is to cover other options or modifications that may be extended based on the claims of this application. To provide a thorough understanding of this application, the following description will include many specific details. This application can also be implemented without these details. In addition, to avoid confusion or obscuring the focus of this application, some specific details will be omitted in the description.

It should be noted that, in the absence of conflict, the embodiments in this application and the features in the embodiments can be combined with each other.

Hereinafter, if used, the terms "first", "second", and the like are for descriptive purposes only and should not be understood as indication or implication of relative importance or implicitly specification of the number of technical features indicated. Thus, features defined with "first", "second", and the like may explicitly or implicitly include one or more of such features. In the description of this application, unless otherwise specified, "multiple" means two or more.

Furthermore, when describing the embodiments of this application, the use of "may" refers to "one or more embodiments of this application".

The technical terms used herein are for the purpose of describing specific embodiments and are not intended to limit this application. As used herein, the singular form is intended to include the plural form as well, unless the context clearly indicates otherwise. It should further be understood that the term "include" when used in this specification, refers to the presence of the described features, values, steps, operations, elements, and/or components, but does not exclude the presence or addition of one or more other features, values, steps, operations, elements, components, and/or combinations thereof.

The embodiments of this application are described below with reference to the drawings in the embodiments of this application. The data ranges described in this application include the endpoint values unless otherwise specified. The electrochemical apparatus of this application is exemplified by a lithium-ion battery to illustrate its effects.

The energy density of lithium-ion batteries is typically improved by increasing the capacity and voltage of the active material in the electrode and increasing the content of the active material in the electrode, where increasing the compacted density of the active material and preparing a thicker electrode active layer can both increase the content of the active material.

In lithium-ion batteries, differences in electric field strengths, potentials, and polarization between the edge region and the central region of the electrode plate lead to nonuniform electrochemical reactions in the edge region and the main region of the electrode plate. This non-uniformity of electrochemical reactions becomes more pronounced with an increase in the thickness and compacted density of the active layer, thereby deteriorating the overall performance of the battery (including but not limited to affecting cycle life and causing thermal safety issues) and limiting significant increases in the thickness and compacted density of the active layer.

In view of this, some embodiments of this application provide an electrochemical apparatus and an electronic apparatus using the same.

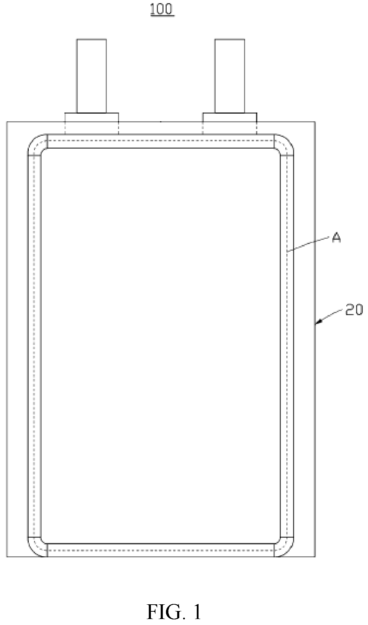

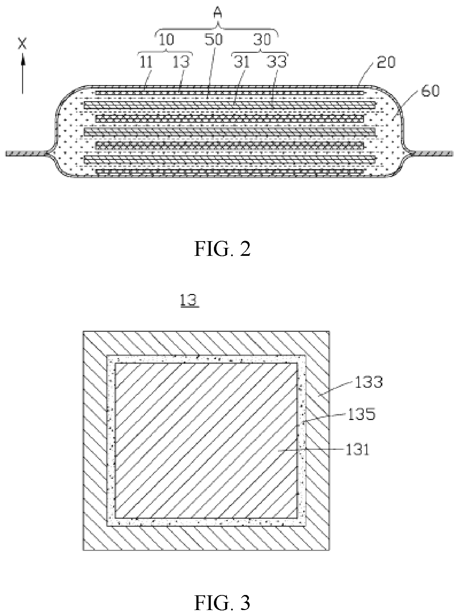

Refer to FIG. 1 in which an electrochemical apparatus 100 according to an embodiment of this application is shown. Refer to FIG. 2 in which the electrochemical apparatus 100 includes a positive electrode 10, a negative electrode 30, and a separator 50. The separator 50 is disposed between the positive electrode 10 and the negative electrode 30. As shown in FIG. 2, the positive electrode 10, the separator 50, and the negative electrode 30 may be alternately stacked along the thickness direction X to form a stacked electrode assembly A, or the positive electrode 10, the separator 50, and the negative electrode 30 may be sequentially stacked and wound with respect to a central axis to form a wound electrode assembly (not shown). The following description takes the stacked electrode assembly A as an example.

The electrochemical apparatus 100 further includes a housing 20 and an electrolyte 60, with the electrolyte 60 and the electrode assembly A accommodated within the housing 20. The housing 20 may be a packaging bag obtained by encapsulating with a packaging film, such as but not limited to an aluminum-plastic film, in other words, the electrochemical apparatus may be a pouch battery. The housing 20 may alternatively be, but is not limited to, a steel shell battery, an aluminum shell battery, or other housings disclosed in the prior art.

The positive electrode 10 includes a positive electrode current collector 11 and a positive electrode active layer 13 disposed on at least one surface of the positive electrode current collector 11. In this embodiment, as shown in FIG. 2, the positive electrode active layer 13 may be disposed on only one side of the positive electrode current collector 11, or the positive electrode active layer 13 may be disposed on two opposite surfaces of the positive electrode current collector 11.

The positive electrode current collector 11 may use aluminum foil, nickel foil, or any composite current collector disclosed in the prior art, such as but not limited to a current collector formed by combining the aforementioned conductive foil with a polymer substrate.

Refer to FIG. 3. The positive electrode active layer 13 includes a central region 131 and an edge region 133 surrounding an outer periphery of the central region 131. When the positive electrode 10 correspondingly forms a stacked electrode assembly A, as shown in FIG. 3, along a thickness direction X, the edge region 133 forms a ring (a rectangular ring as shown in FIG. 3) surrounding the central region 131. In a case that the positive electrode 10 correspondingly forms a wound electrode assembly, when the positive electrode 10 is laid flat, that is, not wound, along the thickness direction of the positive electrode 10, the edge region 133 forms a ring (a rectangular ring as shown in FIG. 3) surrounding the central region 131; when the positive electrode 10 is wound to form a wound electrode assembly, the edge region 133 includes a starting end and a terminating end for winding of the positive electrode active layer 13, as well as two opposite ends of the positive electrode active layer 13 along a winding central axis.

The edge region 133 includes a first positive electrode active material, and the central region 131 includes a second positive electrode active material. A ratio of a solid-phase diffusion coefficient (denoted as Ds₁) of the first positive electrode active material to a solid-phase diffusion coefficient (denoted as Ds₂) of the second positive electrode active material is 1:3 to 1:1.05, and a solid-phase diffusion coefficient of the first positive electrode active material is 10⁻¹⁵ cm²/s to 10⁻⁵ cm²/s. The first positive electrode active material with a lower solid-phase diffusion coefficient in the edge region 133 and the second positive electrode active material with a higher solid-phase diffusion coefficient in the central region 131 are used for a differentiated design of the edge region 133 and the central region 131 of the positive electrode 10. This improves a solid-phase diffusion rate of lithium ions in the central region 131 relative to the edge region 133, thereby improving kinetic performance of the central region 131 relative to the edge region 133. This reduces the difference in kinetic performance between the central region 131 and the edge region 133, narrows the difference in lithium deintercalation amounts between the edge region 133 and the central region 131, and thus enhances the overall capacity utilization of the electrochemical apparatus, thereby improving the overall performance of the electrochemical apparatus. In some implementations, the solid-phase diffusion coefficient Ds₁ of the first positive electrode active material may be 10⁻¹⁵ cm²/s, 10⁻¹⁴ cm²/s, 10⁻¹² cm²/s, 10⁻¹⁰ cm²/s, 10⁻⁹ cm²/s, 10⁻⁷ cm²/s, or 10⁻⁵ cm²/s, or any specific value between any two adjacent values mentioned above. Ds₁:Ds₂ may be 1:3, 1:2.75, 1:2.5, 1:2, 1:7.5, 1:1.5, or 1:1.05, or any specific ratio between any two adjacent ratios mentioned above. The solid-phase diffusion rate of lithium ions in the first positive electrode active material with a solid-phase diffusion coefficient within the above range facilitates intercalation and deintercalation of lithium ions, contributing to improvement of the overall kinetic performance of the electrochemical apparatus 100. The specific ratio of solid-phase diffusion coefficients is also conducive to reducing the difference between the two regions while avoiding reverse differences, thereby improving the overall kinetic performance of the electrochemical apparatus 100. In some implementations, Ds₁:Ds₂ may be 1:2.8 to 1:1.5. Under 100% SOC condition, a lithium deintercalation amount of the first positive electrode active material in the edge region 133 is greater than that of the second positive electrode active material in the central region 131, with a difference being 0.1% to 2%, for example, 0.1%, 0.3%, 0.5%, 0.8%, 1%, 1.2%, 1.5%, 1.7%, or 2%, or any specific value between any two adjacent values mentioned above. This reduces the difference between the electrochemical reactions in the edge region and the central region, facilitating the improvement of the overall performance of the electrochemical apparatus.

A particle size Dᵥ50 of the first positive electrode active material may be larger than a particle size Dᵥ50 of the second positive electrode active material. The edge region 133 is designed to have the active material with a larger particle size and the central region 131 is designed to have the active material with a smaller particle size, to reduce a solid-phase transport distance of lithium ions in the active material in the central region 131 relative to the edge region 133, thereby improving the kinetic performance of the central region 131 relative to the edge region 133. This reduces the difference in the kinetic performance between the central region 131 and the edge region 133, thereby facilitating improved overall capacity utilization of the electrochemical apparatus and improving the overall performance of the electrochemical apparatus. Specifically, a ratio of the particle size Dᵥ50 of the first positive electrode active material to the particle size Dᵥ50 of the second positive electrode active material may be 1.1:1 to 2:1, for example, 1.1:1, 1.3:1, 1.5:1, 1.7:1, 1.9:1, or 2:1, or any specific ratio between any two adjacent ratios mentioned above. In some implementations, the particle size Dᵥ50 of the first positive electrode active material may be 1.0 micron to 25 microns, for example, 1.0 micron, 5.0 microns, 7.0 microns, 10.0 microns, 14.0 microns, 15.0 microns, 17.0 microns, 25 microns, or any specific value between any two adjacent values mentioned above. The first positive electrode active material within the above specific particle size range and the second positive electrode active material within the specific ratio range relative to the first positive electrode active material are conducive to achieving higher compacted density and higher kinetic performance of the electrode assembly, thereby improving the overall performance of the electrochemical apparatus 100.

The first positive electrode active material and the second positive electrode active material respectively include compounds capable of reversibly intercalating and deintercalating lithium ions (that is, lithiated intercalation compounds). In some implementations, the first positive electrode active material and the second positive electrode active material may respectively include lithium transition metal composite oxides. The lithium transition metal composite oxide contains lithium and at least one element selected from cobalt, manganese, and nickel. In some implementations, the first positive electrode active material may include, but is not limited to, at least one of lithium cobalt oxide (LiCoO₂), lithium nickel cobalt manganese ternary material (NCM), lithium manganese oxide (LiMn₂O₄), lithium nickel manganese oxide (LiNi_{0.5}Mn_{1.5}O₄), or lithium iron phosphate (LiFePO₄). The second positive electrode active material may include, but is not limited to, at least one of lithium cobalt oxide (LiCoO₂), lithium nickel cobalt manganese ternary material (NCM), lithium manganese oxide (LiMn₂O₄), lithium nickel manganese oxide (LiNi_{0.5}Mn_{1.5}O₄), or lithium iron phosphate (LiFePO₄).

In some implementations, a width of the edge region 133 may be 2 mm to 10 mm, for example, 2 mm, 3 mm, 4 mm, 5 mm, 6 mm, 7 mm, 8 mm, 9 mm, or 10 mm, or any specific value between any two adjacent values mentioned above. The width refers to a distance between any position on an outer periphery of the edge region 133 away from the central region 131, in other words, any position on the outer periphery of the entire positive electrode active layer 13, and a nearest point on an inner periphery of the edge region 133 connected to the central region 131.

Since the positive electrode active layer 13 undergoes a pressing process during formation, an outer edge of the central region 131 and an inner edge of the edge region 133, which are adjacent or in contact before pressing, mix with each other after pressing to form a transition region 135. That is, the positive electrode active layer 13 further includes a transition region 135, where the transition region 135 connects the inner periphery of the edge region 133 and the outer periphery of the central region 131. In some implementations, the width of the transition region 135 may be 0.02 mm to 0.5 mm, for example, 0.02 mm, 0.1 mm, 0.2 mm, 0.3 mm, 0.4 mm, or 0.5 mm, or any specific value between any two adjacent values mentioned above.

Additionally, since the positive electrode active layer 13 undergoes a pressing process during formation, a thickness of each region changes after pressing. The edge region 133 may extend in a direction away from the central region 131, while the central region 131, being surrounded by the edge region 133, has its movable space restricted by the edge region 133 during pressing of the central region 131, resulting in the thickness of the central region 131 typically being greater than that of the edge region 133. In some implementations, a thickness difference between the central region 131 and the edge region 133 may be less than 1 micron, which is conducive to improving flatness of the electrode assembly formed by the positive electrode 10 and the negative electrode 30, thereby enhancing overall flatness of the electrochemical apparatus. In some implementations, the thickness of the edge region may be 50 microns to 1000 microns. The above thickness range of the edge region 133 and the difference range between the central region 131 and the edge region 133 help avoid the impact of flatness-related issues, such as purple spots or lithium precipitation, on the overall performance of the electrochemical apparatus. Further, the thickness of the edge region may be 100 microns to 500 microns, for example, 100 microns, 200 microns, 300 microns, 400 microns, 500 microns, or any specific value between any two adjacent values mentioned above.

In some implementations, the compacted density of the edge region 133 may be greater than the compacted density of the central region 131. The edge region 133 is designed to have a higher compacted density and the central region 131 to have a lower compacted density, to improve the liquid-phase diffusion capability of lithium ions in the central region 131 relative to the edge region 133, thereby improving the kinetic performance of the central region 131 relative to the edge region 133. This reduces the difference in kinetic performance between the central region 131 and the edge region 133, thereby facilitating improved overall capacity utilization of the electrochemical apparatus and improving the overall performance of the electrochemical apparatus. Specifically, the difference in the compacted densities between the edge region 133 and the central region 131 may be 0.03 g/cc to 0.5 g/cc, for example, 0.03 g/cc, 0.06 g/cc, 0.1 g/cc, 0.2 g/cc, 0.3 g/cc, 0.4 g/cc, or 0.5 g/cc, or any specific value between any two adjacent values mentioned above. In some implementations, the compacted density of the edge region 133 may be 2.0 g/cc to 4.35 g/cc, for example, 2.0 g/cc, 2.3 g/cc, 2.6 g/cc, 3.0 g/cc, 3.35 g/cc, 3.5 g/cc, 4.0 g/cc, or 4.35 g/cc, or any specific value between any two adjacent values mentioned above. The edge region 133 with the compacted density within the above range and the central region 131 with the compacted density within a specific difference range relative to the edge region 133 are conducive to improving the overall volumetric energy density of the electrochemical apparatus 100, thereby further facilitating the improvement of the overall performance of the electrochemical apparatus 100.

In some implementations, a porosity of the edge region 133 may be less than a porosity of the central region 131. The central region 131 is designed to have a higher porosity and the edge region 133 is designed to have a lower porosity, to enhance the liquid-phase diffusion capability of lithium ions in the central region 131 relative to the edge region 133, thereby improving the kinetic performance of the central region 131 relative to the edge region 133. This reduces the difference in kinetic performance between the central region 131 and the edge region 133, thereby facilitating improved overall capacity utilization of the electrochemical apparatus and improving the overall performance of the electrochemical apparatus. Specifically, a ratio of the porosity of the edge region 133 to the porosity of the central region 131 may be 1:2 to 1:1.1, for example, 1:2, 1:1.85, 1:1.75, 1:1.5, 1:1.3, 1:1.2, or 1:1.1, or any specific value between any two adjacent values mentioned above. In some implementations, the porosity of the edge region 133 may be 10% to 45%, for example, 10%, 14%, 15%, 18%, 20%, 23%, 25%, 29%, 30%, 35%, 38%, 41%, or 45%, or any specific value between any two adjacent values mentioned above. The above ranges of porosity and porosity ratio are conducive to reducing the difference between the central region 131 and the edge region 133 while ensuring the kinetic performance of the electrochemical apparatus.

The edge region 133 further includes a first binder to bind first positive electrode active material particles, facilitating formation of a film layer while also improving a bonding strength between the edge region 133 and the positive electrode current collector 11. The central region 131 further includes a second binder to bind second positive electrode active material particles, facilitating formation of a film layer while also improving a bonding strength between the central region 131 and the positive electrode current collector 11.

A content of the second binder in the central region 131 may be less than a content of the first binder in the edge region 133. The edge region 133 is designed to have a higher binder content and the central region 131 is designed to have a lower binder content, to reduce an interfacial transport resistance of lithium ions caused by the second binder in the central region 131 relative to the first binder in the edge region 133, thereby improving the kinetic performance of the central region 131 relative to the edge region 133. This reduces the difference in the kinetic performance between the central region 131 and the edge region 133, thereby facilitating improved overall capacity utilization of the electrochemical apparatus and improving the overall performance of the electrochemical apparatus. Specifically, a ratio of the content of the second binder in the central region 131 to the content of the first binder in the edge region 133 may be 1:1.02 to 1:2, for example, 1:1.02, 1:1.25, 1:1.5, 1:1.75, or 1:2, or any specific ratio between any two adjacent ratios mentioned above. In some implementations, the content of the second binder in the edge region 133 may be 0.4wt% to 4.0wt%, for example, 0.4wt%, 1.0wt%, 1.5wt%, 2.0wt%, 2.5wt%, 3.0wt%, 3.5wt%, or 4.0wt%, or any specific value between any two adjacent values mentioned above. The second binder with the above content and the first binder with a specific content ratio range relative to the second binder are conducive to ensuring the bonding strength between the edge region 133 and the central region 131 and the positive electrode current collector 11, that is, the bonding strength between the positive electrode active layer 13 and the positive electrode current collector 11, while also improving the kinetic performance of the entire positive electrode active layer 13. This contributes to structural stability of the positive electrode 10 and improves the overall kinetic performance of the electrochemical apparatus 100, thereby facilitating the improvement of the overall performance of the electrochemical apparatus 100.

The first binder and the second binder may respectively include, but are not limited to, at least one of polyvinyl alcohol, hydroxypropyl cellulose, diacetyl cellulose, polyvinyl chloride, carboxylated polyvinyl chloride, polyvinyl fluoride, polyvinylidene fluoride (PVDF), ethylene oxide-containing polymer, polyvinylpyrrolidone, polyurethane, polytetrafluoroethylene, polyvinylidene 1,1-difluoroethylene, polyethylene, polypropylene, styrene-butadiene rubber, acrylic (ester)-modified styrene-butadiene rubber, epoxy resin, or nylon. The first binder and the second binder may be the same or different.

The edge region 133 may further include a first conductive agent, and the central region 131 may further include a second conductive agent. A content of the second conductive agent in the central region 131 may be greater than a content of the first conductive agent in the edge region 133. The edge region 133 is designed to have a lower conductive agent content and the central region 131 is designed to have a higher conductive agent content, to enhance an electron transport capability of the central region 131 relative to the edge region 133, thereby improving the kinetic performance of the central region 131 relative to the edge region 133. This reduces the difference in kinetic performance between the edge region 133 and the central region 131, thereby facilitating improved overall capacity utilization of the electrochemical apparatus and improving the overall performance of the electrochemical apparatus. Specifically, the difference between the content of the second conductive agent in the central region 131 and the content of the first conductive agent in the edge region 133 may be 0.1wt% to 2.0wt%, for example, 0.1wt%, 0.5wt%, 1.0wt%, 1.5wt%, or 2.0wt%, or any specific value between any two adjacent values mentioned above. In some implementations, the content of the second conductive agent in the central region 131 may be 0.2wt% to 4.0wt%, for example, 0.2wt%, 0.5wt%, 1.0wt%, 1.5wt%, 2.0wt%, 2.5wt%, 3.0wt%, 3.5wt%, or 4.0wt%, or any specific value between any two adjacent values mentioned above. The second conductive agent with the above specific content and the first conductive agent with a specific content difference range relative to the second conductive agent are conducive to ensuring the electron transport capability of the positive electrode 10 and achieving higher kinetic performance by the positive electrode 10, thereby improving the overall performance of the electrochemical apparatus 100.

The first conductive agent and the second conductive agent may respectively include, but are not limited to, carbon-based materials, metal-based materials, conductive polymers, or any combination thereof. In some implementations, carbon-based materials may include, but are not limited to, natural graphite, artificial graphite, carbon black (SP), carbon nanotubes (CNT), acetylene black, Ketjen black, carbon fiber, or any combination thereof. In some implementations, metal-based materials may include, but are not limited to, metal powder or metal fiber, such as copper, nickel, aluminum, or silver. In some implementations, the conductive polymer may be a polyphenylene derivative. The first conductive agent and the second conductive agent may be the same or different.

The negative electrode 30 includes a negative electrode current collector 31 and a negative electrode active layer 33 disposed on at least one surface of the negative electrode current collector 31. In this embodiment, as shown in FIG. 3, the negative electrode active layer 33 may be disposed on two opposite surfaces of the negative electrode current collector 31.

The negative electrode current collector 31 may use at least one of copper foil, nickel foil, stainless steel foil, titanium foil, or carbon-based current collector, or any composite current collector disclosed in the prior art, such as but not limited to the current collector formed by combining the conductive foil with the polymer substrate.

The negative electrode active layer 33 includes a negative electrode active material. Negative electrode active materials known in the art capable of reversibly deintercalating and intercalating active ions are used. This is not limited in this application. For example, the material may include, but is not limited to, at least one of graphite, soft carbon, hard carbon, carbon fiber, mesocarbon microbeads, silicon-based materials, tin-based materials, lithium titanate, or other metals capable of forming alloys with lithium. The graphite may be selected from at least one of artificial graphite, natural graphite, or modified graphite; the silicon-based material may be selected from at least one of elemental silicon, silicon oxide compounds, silicon-carbon composites, or silicon alloys; and the tin-based material may be selected from at least one of elemental tin, tin oxide compounds, or tin alloys.

The negative electrode active layer 33 further includes a binder to bind the negative electrode active material particles, facilitating formation of a film layer while also improving a bonding strength between the negative electrode active layer and the negative electrode current collector. In some implementations, the binder in the negative electrode active layer 33 may include, but is not limited to, polyvinyl alcohol, carboxymethyl cellulose (CMC), hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene 1,1-difluoroethylene, polyethylene, polypropylene, styrene-butadiene rubber (SBR), acrylic (ester)-modified styrene-butadiene rubber, epoxy resin, or nylon.

The separator 50 includes a film layer with a porous structure, and a material may include at least one of polyethylene, polypropylene, polyvinylidene fluoride, polyethylene terephthalate, polyimide, or aramid. For example, polyethylene may include at least one selected from high-density polyethylene, low-density polyethylene, or ultra-high molecular weight polyethylene. Polyethylene and polypropylene have a good effect on improving short-circuit prevention and can enhance the stability of the electrochemical apparatus 100 through the shutdown effect.

The electrolyte 60 may be in one or more states of gel, solid, or liquid. The liquid electrolyte includes a lithium salt and a non-aqueous solvent. The lithium salt is selected from one or more of lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium methanesulfonate (LiCH₃SO₃), lithium bis(fluorosulfonyl)imide (LiFSI), lithium bis(trifluoromethanesulfonyl)imide (LiTFSI), lithium trifluoromethanesulfonate (LiCF₃SO₃), lithium bis(trifluoromethylsulfonyl)imide (LiN(SO₂CF₃)₂), lithium tris(trifluoromethylsulfonyl)methide (LiC(SO₂CF₃)₃), lithium bis(oxalate)borate (LiBOB), or lithium difluorophosphate (LiPO₂F₂). For example, the lithium salt may be LiPF₆, as it provides high ionic conductivity and improves cycling performance. The non-aqueous solvent may be a carbonate compound, a carboxylate compound, an ether compound, a nitrile compound, other organic solvents, or a combination thereof. Examples of carbonate compounds include diethyl carbonate (DEC), dimethyl carbonate (DMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, and combinations thereof.

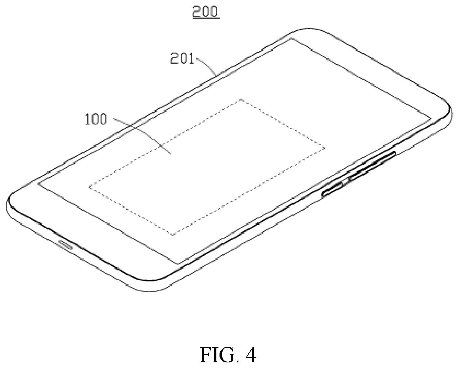

Refer to FIG. 4. The above electrochemical apparatus 100 may be applied to an electronic apparatus 200. The electronic apparatus 200 further includes a body 201, and the electrochemical apparatus 100 is electrically connected to the body 201 to supply power to the body 201. The electronic apparatus 200 may include, but is not limited to, notebook computers, pen-input computers, mobile computers, e-book readers, portable phones, portable fax machines, portable copiers, portable printers, head-mounted stereo headsets, video recorders, LCD televisions, handheld cleaners, portable CD players, mini discs, transceivers, electronic notebooks, calculators, memory cards, portable recorders, radios, backup power supplies, motors, automobiles, motorcycles, power-assisted bicycles, bicycles, lighting fixtures, toys, gaming consoles, clocks, power tools, flashlights, cameras, large household batteries, and lithium-ion capacitors.

The following specific examples and comparative examples further illustrate this application. It should be understood that the parameters in this application are not limited to those described in the examples and comparative examples and can be selected according to actual needs.

### Example 1

### Preparation of positive electrode

A positive electrode active material lithium cobalt oxide (a solid-phase diffusion coefficient Ds₂ was 2*10⁻⁵ cm²/s and Dᵥ50 was 16.7 microns, that is, Dᵥ50_{central}), binder PVDF, conductive agent SP, and conductive agent CNT were mixed and dispersed in a ratio of 97.5:1.0:1.0:0.5 in N-methylpyrrolidone (NMP) to prepare a first slurry (a solid content was 75%). The first slurry was applied to a 9-micron aluminum foil current collector by extrusion coating and dried to form a first electrode plate, with the first slurry curing to correspondingly form a first active layer (corresponding to the central region).

A positive electrode active material lithium cobalt oxide (a solid-phase diffusion coefficient Ds₁ was 1*10⁻⁵ cm²/s and Dᵥ50 was 25 microns, that is, Dᵥ50_{edge}), binder PVDF, conductive agent SP, and conductive agent CNT were mixed and dispersed in a ratio of 97.75:1.25:0.5:0.5 in NMP to prepare a second slurry (a solid content was 75%). The second slurry was applied outward from the outer periphery of the first active layer of the first electrode plate with a width of 2 mm through gravure coating and dried to form a second electrode plate, with the second slurry curing to correspondingly form a second active layer (corresponding to the edge region).

A cold-pressed positive electrode (a compacted density of an edge region was 4.35 g/cc and porosity was 10%; and a compacted density of a central region was 4.25 g/cc and porosity was 15%) was formed through cold-pressing at a pressure of 80 t and a speed of 20 m/min, and then die-cut to form the positive electrode. In the positive electrode, a width of a transition region Wₜᵣₐₙₛᵢₜᵢₒₙ was 0.2 mm, a width of the edge region W_{edge} was 4.0 mm, a thickness of the central region was 0.5 microns greater than a thickness of the edge region, that is, ΔTk=0.5 microns, and the thickness of the edge region Tk_{edge} was 100 microns. A dimension of the positive electrode was approximately 70 mm*80 mm.

### Preparation of negative electrode

A negative electrode active material graphite, binder SBR, and binder CMC were mixed in a ratio of 97:1.6:1.4 in deionized water to prepare a negative electrode slurry (a solid content was 48%). The negative electrode slurry was applied to a 6-micron copper current collector by extrusion coating and dried to form the negative electrode, with the negative electrode slurry forming the negative electrode active layer. A thickness of the negative electrode active layer was 120 microns. A dimension of the negative electrode was approximately 72 mm*82 mm.

### Preparation of lithium-ion battery

The above positive electrode, separator (a 5-micron PE film with a porosity of approximately 35%), and negative electrode were alternately stacked to form a stacked electrode assembly. After tabs were welded, the assembly was placed in a battery shell; and the electrolyte (1M LiPF₆ in EC:DEC:EMC=1:1:1) was injected. After encapsulation and formation, a lithium-ion battery, that is, an electrochemical apparatus was obtained.

Under 100% SOC, a difference in lithium deintercalation amounts between the edge region and the central region, ΔB, was 1%.

Lithium deintercalation amount XRD characterization method: 1. The first slurry was applied to a 35-µm copper foil surface using a 200-µm doctor blade, dried at 110°C to form a coated electrode plate, and a cold-pressed positive electrode was obtained through cold-pressing at a pressure of 80 t and a speed of 20 m/min. The positive electrode was assembled into a coin-type half-cell against a lithium plate (using a specific coin-type half-cell mold with a window at the top to allow X-ray transmission while ensuring sealing). 2. The coin-type battery assembled in step 1 was charged at a constant current of 0.1C rate to a cutoff voltage of 4.47 V, followed by constant voltage charging at 4.47 V until the cutoff current reached 50 µA. After resting for 5 minutes, the battery was discharged at a constant current of 0.1C rate to 3.0 V. This charge-discharge cycle was repeated three times, with XRD testing conducted synchronously during the charge-discharge process. 3. A linear equation d=-0.7372x+5.2329 was established by modeling an interlayer spacing d of the XRD 003 crystal plane from step 2 with the lithium deintercalation amount x of lithium cobalt oxide during the charge-discharge process (a ratio of charge or discharge capacity at different voltage states to the rated capacity). 4. The fully charged cell was disassembled to obtain the edge region and the central region, and XRD was tested separately. 5. The d values obtained in step 4 were substituted into the relationship from step 3 to obtain the lithium deintercalation amounts of the edge region and the central region, with the difference being the lithium deintercalation amount difference.

### Comparative example 1

Compared to Example 1, the difference in Comparative example 1 lies in the preparation of the positive electrode: A positive electrode active material lithium cobalt oxide (solid-phase diffusion coefficient Ds₁ was 1*10⁻⁵ cm²/s and Dᵥ50 was 25 microns), binder PVDF, conductive agent SP, and conductive agent CNT were mixed and dispersed in a ratio of 97.75:1.25:0.5:0.5 in NMP to prepare a positive electrode slurry (a solid content was 75%). The positive electrode slurry was applied to a 9-micron aluminum foil current collector by extrusion coating and dried to form a positive electrode active layer. A cold-pressed positive electrode (compacted densities of all regions of a positive electrode active layer were 4.35 g/cc and a porosity was 10%) was obtained through cold-pressing at a pressure of 80 t and a speed of 20 m/min, and then die-cut to form the positive electrode. A thickness of the positive electrode active layer was 100 microns.

Stacked lithium-ion batteries corresponding to Examples 2 to 33 were prepared according to the above steps and the tables below, and stacked lithium-ion batteries corresponding to Comparative examples 2 and 3 were prepared according to the above steps and the table 9, with all parameters of the lithium-ion batteries except those listed in the tables being the same as in Example 1 to 33 and Comparative examples 1 to 3.

The following performance tests were conducted on the above examples and comparative examples: DC-rate@1C, CC/(CC+CV)capacity@1C, and -20°C DC-rate@0.2C. The test results are recorded in Tables 1 to 8 and Table 10. The specific methods for each performance test are as follows:
DC-rate@1C: At 25°C, the battery was charged at a constant current of a 0.2C rate to a cutoff voltage, and then charged at the constant cutoff voltage until the current is less than or equal to 0.05C to reach a fully charged state. After resting for 5 minutes, the battery was discharged at a constant current of 0.2C to the cutoff voltage, with a discharge capacity denoted as D₀. After resting for 5 minutes, the battery was charged again at a constant current of a 0.2C rate to the cutoff voltage, and then charged at the constant cutoff voltage until the current is less than or equal to 0.05C to reach a fully charged state again. After resting for 5 minutes, the battery was discharged at a constant current of 1C to the cutoff voltage, with the discharge capacity denoted as D₁. A ratio of Di to D₀ is a capacity retention rate for DC-rate@1C.

CC/(CC+CV) capacity@1C: At 25°C, the battery was charged at a constant current of 1C rate to the cutoff voltage, and then charged at the constant cutoff voltage until the current is less than or equal to 0.05C to reach a fully charged state. A capacity during the constant current stage was denoted as Ccc, and a capacity during the constant voltage stage was denoted as Ccv. A ratio of C_{CC} to (Ccc+Ccv) was CC/(CC+CV) capacity@1C.

-20°C DC-rate@0.2C: At 25°C, the battery was charged at a constant current of 0.2C rate to the cutoff voltage, and then charged at the constant cutoff voltage until the current is less than or equal to 0.05C to reach a fully charged state. After resting for 5 minutes, the battery was discharged at a constant current of 0.2C to the cutoff voltage, with a discharge capacity denoted as D₀. After the battery rested for 5 minutes, a temperature was adjusted to - 20°C. After resting for 5 minutes, the battery was charged at a constant current of 0.2C rate to the cutoff voltage, and charged at the constant cutoff voltage until the current was less than or equal to 0.05C to reach a fully charged state again. After resting for 5 minutes, the battery was discharged at a constant current of 0.2C to the cutoff voltage, with a discharge capacity denoted as D₁. A ratio of D₁ to D₀ was a capacity retention rate for -20°C DC-rate@0.2C.

**Table 1**

| | W_{edge} (mm) | Ds₁:Ds₂ | ΔB | DC-rate@1C | CC/(CC+CV) capacity@1C | -20°C DC-rate@0.2C |
|---|---|---|---|---|---|---|
| Example 1 | 4.0 | 1:2 | 1.00% | 90% | 85% | 60% |
| Example 2 | 3.0 | 1:2 | 1.50% | 87% | 83% | 58% |
| Example 3 | 2.0 | 1:2 | 2.00% | 85% | 81% | 55% |
| Example 4 | 7.0 | 1:2 | 0.50% | 92% | 88% | 62% |
| Example 5 | 10.0 | 1:2 | 0.10% | 95% | 90% | 65% |
| Example 6 | 4.0 | 1:1.05 | 1.90% | 80% | 78% | 50% |
| Example 7 | 4.0 | 1:1.5 | 1.5% | 85% | 82% | 58% |
| Example 8 | 4.0 | 1:2.8 | 0.5% | 93% | 87% | 62% |
| Example 9 | 4.0 | 1:3 | 1.7% | 82% | 80% | 54% |
| Comparative example 1 | -- | 1:1 | 5.00% | 74% | 71% | 44% |

**Table 2**

| | Difference in compacted densities between edge region and central region | ΔB | DC-rate@1C | CC/(CC+CV) capacity@1C | -20°C DC-rate@0.2C |
|---|---|---|---|---|---|
| Example 1 | 0.10 g/cc | 1.00% | 90% | 85% | 60% |
| Example 10 | 0.03 g/cc | 1.90% | 82% | 80% | 52% |
| Example 11 | 0.06 g/cc | 1.50% | 88% | 84% | 58% |
| Example 12 | 0.30 g/cc | 0.60% | 95% | 90% | 65% |
| Example 13 | 0.50 g/cc | 0.20% | 97% | 92% | 68% |
| Comparative example 1 | -- | 5.00% | 74% | 71% | 44% |

**Table 3**

| | Ratio of porosities of edge region to central region | ΔB | DC-rate@1C | CC/(CC+CV) capacity@1C | -20°C DC-rate@0.2C |
|---|---|---|---|---|---|
| Example 1 | 1:1.5 | 1.00% | 90% | 85% | 60% |
| Example 14 | 1:1.1 | 1.70% | 87% | 81% | 55% |
| Example 15 | 1:1.3 | 1.40% | 89% | 84% | 59% |
| Example 16 | 1:1.75 | 0.70% | 94% | 91% | 66% |
| Example 17 | 1:2 | 0.30% | 98% | 95% | 70% |
| Comparative example 1 | -- | 5.00% | 74% | 71% | 44% |

**Table 4**

| | Wₜᵣₐₙₛᵢₜᵢₒₙ (mm) | ΔB | DC-rate@1C | CC/(CC+CV) capacity@1C | -20°C DC-rate@0.2C |
|---|---|---|---|---|---|
| Example 1 | 0.20 | 1.00% | 90% | 85% | 60% |
| Example 18 | 0.02 | 0.80% | 92% | 87% | 63% |
| Example 19 | 0.50 | 1.20% | 88% | 80% | 55% |
| Comparative example 1 | -- | 5.00% | 74% | 71% | 44% |

**Table 5**

| | ΔTk (micron) | Tk_{edge} (micron) | ΔB | DC-rate@1C | CC/(CC+CV) capacity@1C | -20°C DC-rate@0.2C |
|---|---|---|---|---|---|---|
| Example 1 | 0.5 | 100 | 1.00% | 90% | 85% | 60% |
| Example 20 | 0.1 | 100 | 0.20% | 92% | 87% | 63% |
| Example 21 | 1.0 | 100 | 1.90% | 88% | 80% | 55% |
| Example 22 | 0.5 | 50 | 0.20% | 97% | 98% | 73% |
| Example 23 | 0.5 | 1000 | 2.00% | 68% | 60% | 25% |
| Comparative example 1 | -- | 100 | 5.00% | 74% | 71% | 44% |

**Table 6**

| | Dᵥ50_{edge}: Dᵥ50_{central} | ΔB | DC-rate@1C | CC/(CC+CV) capacity@1C | -20°C DC-rate@0.2C |
|---|---|---|---|---|---|
| Example 1 | 1.5:1 | 1.00% | 90% | 85% | 60% |
| Example 24 | 1.1:1 | 1.60% | 85% | 84% | 55% |
| Example 25 | 2:1 | 0.30% | 93% | 88% | 65% |
| Comparative example 1 | -- | 5.00% | 74% | 71% | 44% |

**Table 7**

| | Ratio of binder contents in second slurry to first slurry | ΔB | DC-rate@1C | CC/(CC+CV) capacity@1C | -20°C DC-rate@0.2C |
|---|---|---|---|---|---|
| Example 1 | 1.25:1 | 1.00% | 90% | 85% | 60% |
| Example 26 | 1.02:1 | 1.90% | 85% | 84% | 55% |
| Example 27 | 2:1 | 0.20% | 93% | 88% | 65% |
| Comparative example 1 | -- | 5.00% | 74% | 71% | 44% |

**Table 8**

| | Difference in conductive agent contents between first slurry and second slurry | ΔB | DC-rate@1C | CC/(CC+CV) capacity@1C | -20°C DC-rate@0.2C |
|---|---|---|---|---|---|
| Example 1 | 0.50% | 1.00% | 90% | 85% | 60% |
| Example 28 | 0.10% | 1.80% | 88% | 80% | 55% |
| Example 29 | 2.00% | 0.30% | 92% | 87% | 63% |
| Comparative example 1 | -- | 5.00% | 74% | 71% | 44% |

**Table 9**

| | Positive electrode active material in second slurry | Ds₁ | Compacted density of edge region | Porosity of edge region | Dv50_{edge} | Binder content in first slurry | Conductive agent content in first slurry |
|---|---|---|---|---|---|---|---|
| Example 1 | Lithium cobalt oxide | 1*10⁻⁵ | 4.35 | 10% | 25.0 | 1.00% | 1.50% |
| Example 30 | Lithium iron phosphate | 1*10⁻¹⁴ | 2.00 | 45.0% | 1.0 | 4.00% | 0.20% |
| Example 31 | Nickel cobalt manganese ternary | 1*10⁻⁹ | 3.35 | 30.0% | 15.0 | 0.50% | 1.00% |
| Example 32 | Lithium manganese oxide | 1*10⁻¹⁰ | 3.00 | 29.0% | 14.0 | 1.50% | 3.00% |
| Example 33 | Lithium iron phosphate +lithium manganese oxide (mass ratio=9:1) | 1*10⁻¹⁵ | 2.60 | 35.0% | 10.0 | 2.50% | 4.00% |
| Comparative example 1 | Lithium cobalt oxide | 1*10⁻⁵ | 4.35 | 10.0% | 25.0 | 1.00% | 1.50% |
| Comparative example 2 | Lithium iron phosphate | 1*10⁻¹⁴ | 2.0 | 45.0% | 1.0 | 4.00% | 1.00% |
| Comparative example 3 | Nickel cobalt manganese ternary | 1*10⁻⁹ | 3.35 | 30.0% | 15.0 | 2.00% | 1.00% |

**Table 10**

| | ΔB | DC-rate@1C | CC/(CC+CV) capacity@1C | -20°C DC-rate@0.2C |
|---|---|---|---|---|
| Example 1 | 1.00% | 90% | 85% | 60% |
| Example 30 | 1.90% | 82% | 79% | 50% |
| Example 31 | 0.60% | 95% | 90% | 64% |
| Example 32 | 1.30% | 85% | 80% | 65% |
| Example 33 | 1.50% | 83% | 80% | 55% |
| Comparative example 1 | 5.00% | 74% | 71% | 44% |
| Comparative example 2 | 8.00% | 68% | 62% | 35% |
| Comparative example 3 | 3.00% | 76% | 72% | 47% |

From comparison of the data in Examples 1 to 33 with Comparative examples 1 to 3 in Tables 1 to 10, it can be learned that the differentiated design of the edge region 133 and the central region 131 of the positive electrode 10 reduces the lithium deintercalation amount of the lithium-ion battery, improves rate performance, and thus improves the overall kinetic performance of the lithium-ion battery, while also improving its capacity of the lithium-ion battery, that is, improving the overall performance of the lithium-ion battery. Further, from the data in Examples 1 to 5 in Table 1, it can be learned that a wider edge region 133 of the positive electrode 10 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 6 to 9 in Table 1, it can be learned that when the ratio of the solid-phase diffusion coefficients between the edge region 133 and the central region 131 of the positive electrode 10 is between 1:1.5 and 1:2.8, the difference in lithium deintercalation amounts and in kinetic performance between the central region 131 and the edge region 133 is smaller, resulting in better overall kinetic performance and higher charge-discharge performance of the lithium-ion battery. From the data in Example 1 and Examples 10 to 13 in Table 2, it can be learned that a smaller difference in lithium deintercalation amounts and kinetic performance between the central region 131 and the edge region 133 of the positive electrode 10 means a higher overall kinetic performance and better charge-discharge performance of the lithium-ion battery. From the data in Example 1 and Examples 14 to 17 in Table 3, it can be learned that a smaller porosity ratio between the central region 131 and the edge region 133 of the positive electrode 10 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 18 and 19 in Table 4, it can be learned that a narrower width of the transition region of the positive electrode 10 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 20 and 21 in Table 5, it can be learned that a smaller thickness difference between the central region 131 and the edge region 133 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 22 and 23 in Table 5, it can be learned that a thinner positive electrode active layer 13 means a smaller difference in lithium deintercalation amount and kinetic performance between the central region 131 and the edge region 133, resulting in higher overall kinetic performance and better charge-discharge performance of the lithium-ion battery. From the data in Example 1 and Examples 24 and 25 in Table 6, it can be learned that a larger particle size ratio of positive electrode active materials in the edge region 133 and the central region 131 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 26 and 27 in Table 7, it can be learned that a larger binder content ratio between the edge region 133 and the central region 131 means a smaller difference in lithium deintercalation amounts and kinetic performance between the central region 131 and the edge region 133, resulting in higher overall kinetic performance and better charge-discharge performance of the lithium-ion battery. From the data in Example 1 and Examples 28 and 29 in Table 8, it can be learned that a larger conductive agent content difference between the central region 131 and the edge region 133 means a smaller difference in lithium deintercalation amounts and kinetic performance between the central region 131 and the edge region 133, resulting in higher overall kinetic performance and better charge-discharge performance of the lithium-ion battery. From comparison of the data in Example 1 with Comparative example 1, Example 30 with Comparative example 2, and Example 32 with Comparative example 3 in Table 9, it can be learned that even for different positive electrode active materials, the differentiated design of the edge region 133 and the central region 131 of the positive electrode 10 can still improve the overall kinetic performance and capacity of the lithium-ion battery. From the data in Example 1 and Examples 30 to 33 in Table 9, it can be learned that lithium-ion batteries with different positive electrode active materials exhibit relatively good kinetic performance and capacity due to the differentiated design of the edge region 133 and the central region 131 of the positive electrode 10.

In addition, for those skilled in the art, various other corresponding changes and modifications can be made based on the technical concept of this application, and all such changes and modifications should fall within the protection scope of this application.

## Claims

1. An electrochemical apparatus, comprising a positive electrode, a negative electrode, and an electrolyte, wherein the positive electrode comprises a positive electrode current collector and a positive electrode active layer disposed on at least one surface of the positive electrode current collector, wherein the positive electrode active layer comprises a central region and an edge region surrounding an outer periphery of the central region, the edge region comprises a first positive electrode active material, the central region comprises a second positive electrode active material, a solid-phase diffusion coefficient of the first positive electrode active material is 10⁻¹⁵ cm²/s to 10⁻⁵ cm²/s, and a ratio of the solid-phase diffusion coefficient of the first positive electrode active material to a solid-phase diffusion coefficient of the second positive electrode active material is 1:3 to 1:1.05.

2. The electrochemical apparatus according to claim 1, wherein the ratio of the solid-phase diffusion coefficient of the first positive electrode active material to the solid-phase diffusion coefficient of the second positive electrode active material is 1:2.8 to 1:1.5.

3. The electrochemical apparatus according to claim 1, wherein a compacted density of the edge region is 2.0 g/cc to 4.35 g/cc, the compacted density of the edge region is greater than a compacted density of the central region, and a difference is 0.03 g/cc to 0.5 g/cc.

4. The electrochemical apparatus according to claim 1, wherein a ratio of a porosity of the edge region to a porosity of the central region is 1:2 to 1:1.1, and the porosity of the edge region is 10% to 45%.

5. The electrochemical apparatus according to claim 1, wherein a width of the edge region is 2 mm to 10 mm.

6. The electrochemical apparatus according to claim 1, wherein the positive electrode active layer further comprises a transition region, the transition region connects an inner periphery of the edge region and the outer periphery of the central region, and a width of the transition region is 0.02 mm to 0.5 mm.

7. The electrochemical apparatus according to claim 1, wherein a thickness of the central region is greater than a thickness of the edge region with a difference being less than 1 micron, and the thickness of the edge region is 50 microns to 1000 microns.

8. The electrochemical apparatus according to claim 7, wherein the thickness of the edge region is 100 microns to 500 microns.

9. The electrochemical apparatus according to claim 1, wherein a ratio of a particle size Dᵥ50 of the first positive electrode active material to a particle size Dᵥ50 of the second positive electrode active material is 1.1:1 to 2:1, and the particle size Dᵥ50 of the first positive electrode active material is 1.0 micron to 25 microns.

10. The electrochemical apparatus according to claim 1, wherein the edge region further comprises a first binder, the central region further comprises a second binder, a content of the second binder in the edge region is 0.4wt% to 4.0wt%, and a ratio of a content of the second binder in the central region to a content of the first binder in the edge region is 1:1.02 to 1:2.

11. The electrochemical apparatus according to claim 1, wherein the edge region further comprises a first conductive agent, the central region further comprises a second conductive agent, a content of the second conductive agent in the central region is 0.2wt% to 4.0wt%, and a content of the second conductive agent in the central region is greater than a content of the first conductive agent in the edge region, with a difference being 0.1wt% to 2.0wt%.

12. The electrochemical apparatus according to claim 1, wherein under a 100% SOC condition, a lithium deintercalation amount of the first positive electrode active material in the edge region is greater than a lithium deintercalation amount of the second positive electrode active material in the central region, with a difference being 0.1% to 2%.

13. An electronic apparatus, comprising a body, wherein the electronic apparatus further comprises the electrochemical apparatus according to any one of claims 1 to 12, and the electrochemical apparatus is electrically connected to the body to supply power to the body.
